Europäisches Patentamt

European Patent Office

Office européen des brevets

(19)

(11) **EP 0 294 524 B1**

(12) **EUROPEAN PATENT SPECIFICATION**

(45) Date of publication and mention
of the grant of the patent:
**26.11.1997 Bulletin 1997/48**

(51) Int Cl.[6]: **G01N 27/26**

(21) Application number: **87305101.5**

(22) Date of filing: **09.06.1987**

(54) **Real time scanning electrophoresis apparatus for DNA sequencing**

Echtzeitabtastvorrichtung in einem Elektrophoreseapparat zur DNS-Sequenzbestimmung

Appareil d'électrophorèse avec balayage en temps réel pour l'analyse de séquence d'ADN

(84) Designated Contracting States:
**DE FR GB SE**

(43) Date of publication of application:
**14.12.1988 Bulletin 1988/50**

(73) Proprietor: **THE PERKIN-ELMER CORPORATION**
**Foster City California 94404 (US)**

(72) Inventors:
• **Hunkapillar, Michael W.**
**San Carlos California 94070 (US)**
• **Connell, Charles R.**
**Redwood City California 94062 (US)**
• **Mordan, William J.**
**Sunnyvale California 94087 (US)**
• **Lytle, John D.**
**San Jose California 95120 (US)**
• **Bridgham, John A.**
**Hillsborough California 94010 (US)**

(74) Representative: **West, Alan Harry et al**
**R.G.C. Jenkins & Co.**
**26 Caxton Street**
**London SW1H 0RJ (GB)**

(56) References cited:
**EP-A- 0 157 280**           **EP-A- 0 214 713**
**DE-A- 2 417 305**           **DE-A- 3 020 729**
**DE-A- 3 620 235**           **FR-A- 2 558 262**
**US-A- 4 130 824**

• **PATENT ABSTRACTS OF JAPAN, vol. 10, no.**
**206 (P-478)[2262], 18th July 1986; & JP - A - 61**
**47549 (HITACHI LTD.) 08-03-1986**

## Description

This invention pertains to apparatus for fluorescence detection in electrophoresis systems, and particularly to such apparatus for automatic sequencing of nucleic acids.

The structural analysis of DNA plays an increasingly important role in modern molecular biology. About 4 $\times 10^6$ bases of DNA have been sequenced since the introduction of the enzymatic, or dideoxy, method of rapid sequencing developed by Sanger and his coworkers (Sanger, et al, Proc. Natn. Acad. Sci. U.S.A. 74,5463-5467 (1977), A.J.H. Smith, Meth. Enzymol. 65,560-580 (1980)) and the chemical method developed by Maxam and Gilbert (S.M. Maxam and W. Gilbert, Meth. Enzymol. 65,499-559 (1980)). Typically, four separate reactions are performed on any particular DNA segment to be analyzed. In the enzymatic method, these reactions produce DNA fragments terminating in either adenosine (A), cytosine (C), guanosine (G), or thymidine (T). In the chemical method, typically, fragments terminating in G, G + A, C + T, or C are produced. In both cases the four sets of reaction products are electrophoresed in adjacent lanes of a high-resolution polyacrylamide gel. An autoradiographic image of the gel is produced, and the autoradiogram is examined to determine the relative lengths of the DNA fragments generated in each of the four reactions. The DNA sequence is inferred directly from that information.

Both of these techniques are very effective but they are also highly labor-intensive, relatively expensive, and involve the use of radioisotopes; values of approximately three to ten thousand bases sequenced per person-year at a cost of one to five dollars per base are representative. For these reasons and since much DNA remains to be sequenced (there are $3 \times 10^9$ bases in the human genome alone), there has been much recent activity directed toward development of an automated arid non-isotopic method of DNA sequence analysis.

One of the more successful attempts has been carried out by Lloyd Smith and coworkers in the laboratory of Leroy Hood at California Institute of Technology (see Bio/Technology, Vol. 3, May 1985). In that approach, four fluorescent dyes with different colored tags are used instead of radioactive labels. Each color corresponds to a different nucleoside so that if the samples are co-separated electrophoretically, the "ladder" of DNA fragments produced during sequencing is segregated into fluorescent multi-colored rungs, each color corresponding to one of the bases A, G, C, or T. As the length of the column is scanned by a fluorescence sensor, the order of the colored bands corresponds to the specific gene sequence. The specific fluorophores selected by Smith, et al, were fluorescein isothiocyanate (FITC) with an emission peak at 520nm, 4-chloro-7-nitrobenzo-2-oxa-1-diazole (NBD chloride) emitting at 550 nm, tetramethylrhodamine isothiocyanate (TMRITC) emitting at 580 nm, and Texas Red emitting at 610 nm. These emission peaks make the dyes look green, green-yellow, orange-red, and red, respectively.

The specific method used by Smith, et al, was an adaptation of the dideoxy (enzymatic) method of Sanger, which generally involves cloning the gene of interest in the single-stranded DNA phage M13. A primer sequence complementary to the phase sequence adjacent to the cloned gene is used to initiate a DNA synthesis that copies a portion of the gene. In the scheme devised by the Cal Tech group, a single molecule of fluorescent label is linked to each primer. The cloned genes and primers are then placed in four separate DNA synthesis reaction mixtures, each containing all four nucleosides. A small amount of a dideoxy form of a nucleoside, ddATP, ddCTP, ddGTP, or ddTTP is added to each batch. When a dideoxy triphosphate randomly replaces a conventional nucleoside and is incorporated into the developing DNA strand in the synthesis reaction, the nascent DNA copy immediately stops growing. As a result, all strands in the batch with ddATP terminate at a location where adenosine appears in the sequence. Site-specific stops at the C, G, and T positions occur in the other three reaction batches as well.

To distinguish the four bases, a different florescent label is used in each reaction mixture. To achieve that, all DNA copies that end in A are labeled with the green-colored FITC; those terminating in the C are labeled with the green-yellow NBD chloride, those terminating in G are labeled with the orange-red TMRITC tag, and copies terminating in T are labeled with Texas Red.

EP 0214713 describes an apparatus which employs a two-dimensional charge coupled device (CCD) to measure radiation from a one or two-dimensional array of spots produced by an electrophoretic separation of samples.

DE 3620235 describes an electrophoretic system for determining the size of radioactively labeled biological molecules. the system comprises a cell connected to a voltage source to provide for electrophoretic separation; a detector to detect radiation from the electrophoretic lanes and to produce an electrical output signal; pulse processing means coupled to the detector for determining the pulse rate from each lane; and a calculator for correlating the pulse rate as a function of time from these tracks with a temporal function stored in the calculator memory to compare the result against predetermined values.

In the Cal Tech automated system, aliquots from all four reactions mixtures are electrophoresed through a single polyacrylamide tube gel that sorts the various length fragments by size. Positioned at the bottom of the electrophoresis gel is an argon ion laser that sequentially illuminates each band as it migrates through the gel. When excited by laser light the fluorophores emit at their characteristic wavelength, and the emissions are detected and identified by a sensor. The sequence of emission colors is converted by the machine into a nucleotide sequence.

Although the Cal Tech group has been able to automate the sequencing process, bringing what used to require four lanes into one lane, and have substantially eliminated problems with mobility differences between bases, significant problems still remain to be solved. First, the detection system design is less than optimal in sensitivity. Second, and more importantly, the apparatus can handle only one column at a time, whereas when using autoradiographs many lanes on a slab gel can be sequenced at the same time.

What is needed is a high throughput, real time, fluorescence detection apparatus that can perform nucleic acid sequencing on many lanes of a gel simultaneously. Furthermore, the apparatus should have a high sensitivity but the detection system should not require frequent attention by trained personnel.

A real-time, automated, nucleic acid sequencing apparatus is provided that offers high speed, definitive sequencing on many samples at the same time. The apparatus permits more than one clone to be sequenced at a time, thus vastly decreasing the time required to sequence longer fragments and reducing sequencing costs accordingly. Furthermore, the detection system at the heart of the apparatus is designed to eliminate costly alignment procedures and, concomitantly, to eliminate the need for constant attention by highly trained personnel.

Accordingly, the present invention provides apparatus for detecting electromagnetic radiation from a plurality of electrophoretic lanes which are substantially parallel and arranged in a substantially planar array as defined in claim 1.

Furthermore, the method of detecting electromagnetic radiation from a plurality of electrophoretic lanes of an electrophoresis apparatus involves the steps defined in claim 5.

In its broadest sense, and in accordance with preferred embodiments of the invention, an apparatus is provided for detecting electromagnetic radiation from a plurality of lanes in an electrophoresis system wherein the plurality of lanes are arranged in a planar array. The apparatus includes an optical system for detecting the radiation at a plurality of wavelengths emanating from the plurality of lanes. To accomplish that function, the optical system is made up of a collection element for focussing the radiation, a filter for selectively transmitting the plurality of wavelengths received from the collection element, and a detection system for measuring intensity of the radiation received from the filter means. The apparatus also has a translational stage for mounting the optical system and for moving the optical system in a direction parallel to the planar array of electrophoresis lanes in order to move the collection element to receive radiation from the lanes, one lane at a time. The apparatus also includes a computer system for controlling the filter and the stage. The computer system also receives intensity data from the detector and correlates the intensity data with the corresponding lane and corresponding wavelengths transmitted by the filter in real time.

To use the apparatus for sequencing nucleic acids, the nucleic acids are prepared according to the enzymatic method and labeled as per Smith, et al. Nucleic acids are then electrophoresed in the apparatus and the computer is used to sort the intensity data into time and wavelength information for each lane, thereby arriving at a sequence for each lane.

Fig. 1 illustrates an electrophoresis apparatus and enclosure according to the invention.

Fig. 2A shows a schematic representation of the invention in a horizontal cut through the optical system.

Fig. 2B is a schematic representation of the invention in a vertical cut through the optical system.

Figs. 3A and 3B illustrate the construction of wells in the electrophoresis apparatus.

Fig. 4A illustrates a focussing telescope according to the invention.

Figs. 4B and 4C show details of lenses used in the focussing telescope.

Fig. 5A illustrates a collector lens and Fabry lens group according to the invention.

Figs. 5B, 5C and 5D show details of the lenses illustrated in Fig. 5A.

Fig. 6 is a table showing detailed dimensions for the lenses and optical system.

Figs. 7A-7D illustrate the mechanical configuration of the optical system in four views.

Fig. 7E is a table of dimensions for the mechanical configuration shown in Figs. 7A-7D.

Fig. 8 is a schematic illustration of a computer system according to the invention.

Fig. 9 is a flow chart illustrating the computer logic to arrive at a nucleic acid sequence from the electrophoresis and timing data.

Figs. 10A-10D are plots of intensity data taken with the apparatus of the invention for each of four wavelengths.

Fig. 11 is a superposition of the plots of Figs. 10A-10D.

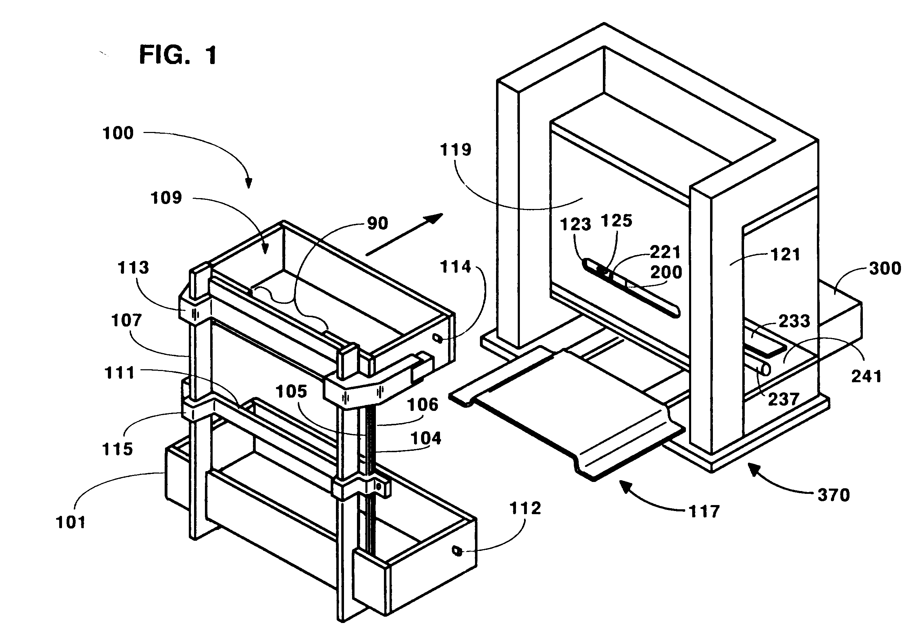

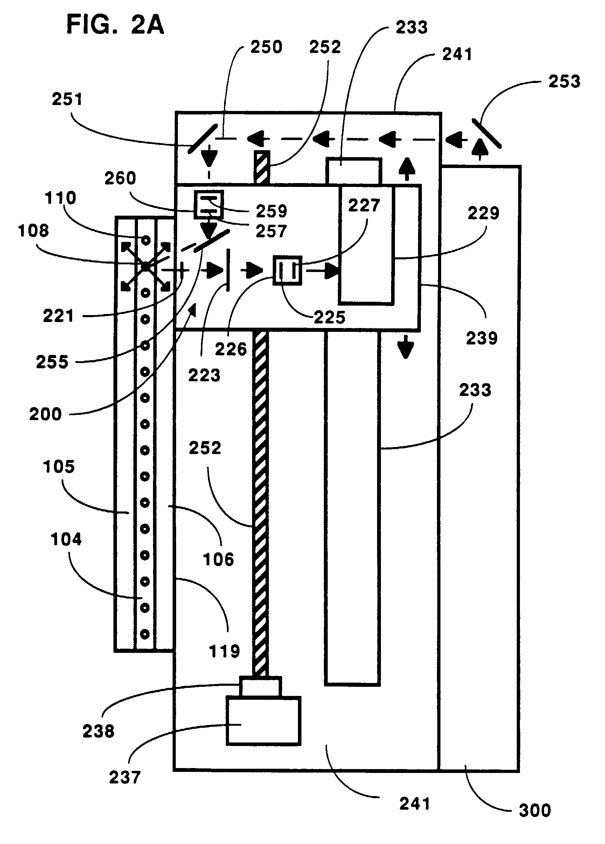

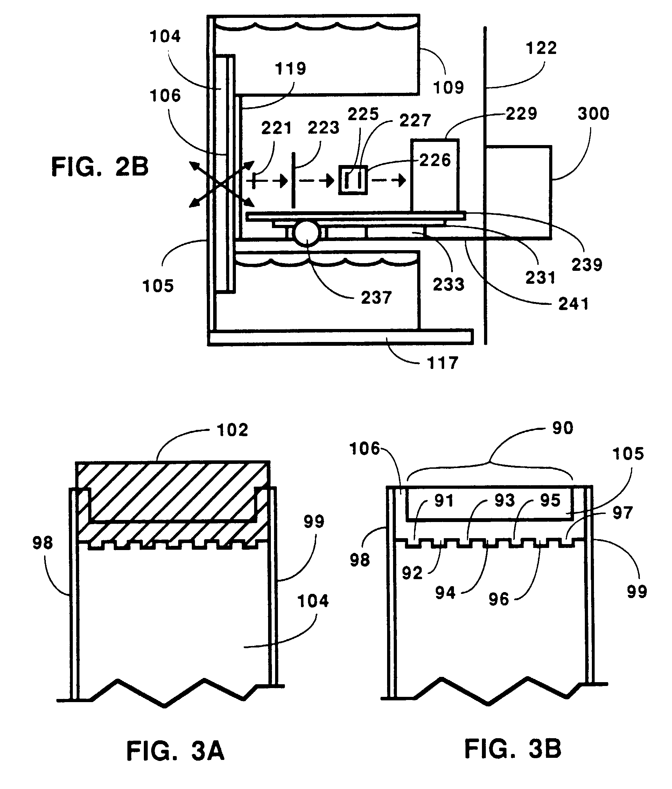

Shown in Fig. 1 and Figs. 2A and 2B is a schematic representation of a preferred embodiment of the invention which is made up of an electrophoresis apparatus 100 having a polyacrylamide slab gel 104, a laser 300 for providing an intense source of electromagnetic radiation, and an optical detection system 200 that directs the laser light onto the slab gel and detects the fluorescence of dyes attached to the materials being electrophoresed in the gel. During operation, the electropheresis apparatus 100, the laser 300 and the optical detection system are enclosed in a light-tight environment, such as a box (not shown).

The electrophoresis apparatus 100 has a transparent front panel 106 and a transparent back panel 105 with gel 104 sandwiched therebetween. Also included is lower buffer chamber 101 and an upper buffer chamber 109 which are designed to provide communication between the gel 104 and the buffer solutions contained in the two chambers. The buffer chambers and the plates 105 and 106 are held in a fixed relationship to each other by a frame 107 having clamps 113 and 115. The electrophoresis apparatus also includes a beam dump 111 for stopping direct light from laser 300 from traversing a path beyond the electrophoresis apparatus. In addition, each buffer chamber includes a banana plug (112 and 114) for connecting a voltage source across the gel (typically 1000-1500 volts). In one preferred mode, the gel 104 is 8% by weight of acrylamide monomer and is prepared according to techniques well known in the art (see Maniatis, et al, Molecular Cloning, page 478). In order to introduce samples to be sequenced into the electrophoresis apparatus, a series of wells such as 91 through 97 is created at the top of the gel as illustrated schematically in Figs. 3A and 3B. First, spacers 98 and 99 are placed on plate 106 to define the desired thickness of the gel 104 and plate 105 is affixed to plate 106 creating a cavity therebetween. Typical materials for spacer 98 and 99 are nylon or Delrin™ strips. The gel is then poured into the cavity, the comb is placed on top, and the gel is allowed to solidify. The comb 102 is then removed, leaving the series of wells at the top of the gel. Samples can then be injected directly into the wells. Because the samples are suitably segregated by the walls of the wells, and because the diffusion coefficient is very low in the gel, well defined lanes such as lanes 110 and 108 illustrated in Fig. 2A appear during electrophoresis, one lane for each well. Although only seven lanes have been shown, in the preferred mode sixteen are typically used for a 10-inch wide gel. The depth and width of the wells are both typically in the range of 0.5cm to 1cm, and spacers 98 and 99 are usually about 1cm wide. Gel thickness is typically in the range of 0.5 mm to 1.0 mm, and the preferred height of the gel is 15.75 inches. The plates 105 and 106 are typically 3.0 mm to 5.0 mm thick and are constructed of a clear, non-fluorescent material such as pyrex borosilicate glass. A particularly suitable material is a Schott glass known in the art by the tradename TEMPAX™ which has a low fluorescence, an index of refraction close to that of the gel (n=1.47), and which can withstand high temperatures and thermal shock. (TEMPAX™ is produced by the Schott Optical Company.) It should also be noted that there is a cut-out 90 in the top of plate 106 in order for the buffer solution in buffer chamber 109 to communicate with the gel during electrophoresis. In another preferred mode, the top 2cm to 4cm of the gel immediately below the comb is poured with 5% by weight of acrylamide monomer, with the balance of the gel being 8% acrylamide monomer. This combination of concentrations appears to enhance the speed and the amount of the sample materials which enter the gel initially. Yet another approach is to mix agarose with the acrylamide gel in the top 2cm to 4cm.

As illustrated in Fig. 1, the electrophoresis apparatus is designed to fit onto a shelf 117 of an enclosure 370. The shelf is configured to slide into the enclosure 370 bringing the plate 106 into contact with a heat transfer plate 119, in order to equalize and dissipate heat generated during the electrophoresis process. A slot 123 in plate 119, permits light to pass through the plate 119 for causing fluorescence of the various dyes and for permitting detection of that fluorescence. The enclosure 370 includes a base plate 241 that is located above the shelf 117 so that the buffer chamber 101 can slide thereunder. Structural integrity of the enclosure is provided by liner 121 that fits around the perimeter of the electrophoresis apparatus 100 when it is in place on the shelf.

The optical detection system 200 is attached to a plate 239 which rides on a translational stage 231 attached to base plate 241 via a guide rail 233. The stage is translated horizontally back and forth by a screw 252 driven by a DC motor 237, and the position of the stage is monitored by a shaft encoder 238. Optical sensors 242 and 244 (not shown) are used to monitor end of travel for the stage. Although there are several different translational stages that can be used, a particularly useful one because of its size and smooth operation is bearing track assembly part number RSR 5WUU, available from THK, Co. Ltd., located in Elk Grove Village, Illinois.

As indicated earlier, the source of electromagnetic radiation to cause fluorescence is laser 300. In the preferred embodiment, an argon ion laser is used which is operated in a mode providing two lines, one at 488.0 nanometers and one at 514.5 nanometers, with both lines having about equal power, about 7 mW for each line, and a total power of 20 mW. Unlike the optical detection system 200, laser 300 is held fixed. Light 250 emanating from the laser first impinges on a 45° mirror 253, then on a 45° mirror 251 so that it again becomes parallel to the direction of translation of the optical detection system. Thus, motion of the optical detection system does not affect the incidence angle of the light into the optical detection system.

The optical detection system 200 is made up of a focussing telescope 260 having lenses 257 and 259 to decrease the size of the incident beam and to focus the light onto the gel lanes. The path of the light from the focussing telescope is diverted toward the gel by a Brewster angle mirror 255 through a window 125, the window and the mirror being fixed relative to the stage 231. The incidence angle at mirror 255 was chosen at the Brewster angle in order to minimize the polarized laser light scatter that interferes with fluorescence detection. The individual lanes are accessed by moving the stage back and forth along guide rail 233. As light from laser 300 strikes a dye in a lane, the dye fluoresces as indicated for lane 108. A collector lens 221 collects a portion of the fluorescent light and directs it toward a filter wheel 223 which is made up of four color filters arranged as quadrants of the wheel. As the filter wheel is rotated, the pass bands of the filters selectively transmit particular wavelengths of the fluorescent light, one at a time, to a Fabry lens group 226, made up of lenses 225 and 227.

The Fabry group is located at the focus of the collector lens 221 and is configured to image the collector lens onto the active area of a side-on photomultiplier tube 229, such as an R928 available from Hamamatsu, rather than to image the lanes themselves. Generally, the photocathode output signal varies with the location of the light signal on the active area. By imaging the collector lens instead of the lanes, the location of the light on the photomultiplier is stable even when the location of illumination on the gel is changed. Hence, one does not see spurious variations in the photomultiplier output signal if the illumination location on the gel should be changed for some reason e. g. from imperfect alignment. Another purpose of using a pair of lenses for the Fabry group is to further desensitize the system to aberration components arising from alignment errors. In order to focus the collector lens onto the photomultiplier tube within a reasonable distance, the Fabry group must have a relatively high power. To use one lens to achieve high power results in field curvature and geometric distortion which, if not corrected, would cause the image on the active surface to move in and out of focus if the area of illumination varies laterally during a measurement sweep e.g. if it were not properly aligned or if the gel plate should have ripples. Hence, a two lens group is used, the Fabry lens 227 being an aspheric, so that together field curvature and geometric distortion are removed. Hence, even with misalignment or ripples, the image on the photomultiplier is exceedingly stable and does not change in size.

The particular color filters used with system vary with the selection of dyes. In the preferred mode, each dye is selected from a separate one of four sets of dyes. For those dyes, the filters chosen have nominal center wavelengths of 540nm, 560nm, 580nm and 610nm, all with a band pass of 10nm (as measured at the 50% transmission point). Such filters are available, for example, from OMEGA Optical of Battlesborough, VT.

The four sets of dyes are as follows. Set I consists of fluorescein mono-derivatized with a linking functionality at either the 5 or 6 carbon position (as determined by the Color Index numbering system). Illustrative examples of set I members include fluorescein-5-isothiocyanate, fluorescein-6-isothiocyanate (the -5- and -6- forms being referred to collectively as FITC), fluorescein-5-succinimidylcarboxylate, fluorescein-6-succinimidylcarboxylate, fluorescein-6-succinimidylcarboxylate, fluorescein-5-iodoacetamide, fluorescein-6-iodoacetamide, fluorescein-5-maleimide, and fluorescein-6-maleimide. These examples of members of set I are available commercially, e.g. Molecular Probes, Inc. (Junction City, OR), or can be synthesized using standard techniques. Set II consists of 2',7'-dimethoxy-4',5'-dichlorofluorescein mono-derivatized with a linking functionality at the 5 or 6 carbon position (the carbons being identified in accordance with the Color Index numbering system). Set II members can be obtained by standard modifications of 2,7-dimethoxy-4,5-dichloro-9-(2',4'dicarboxyphenyl)-6-hydroxy-3H-xanthen-3-one and 2,7dimethoxy-4,5-dichloro-9-(2',5'-dicarboxyphenyl)-6hydroxy-3H-xanthen-3-one (IUPAC notation) disclosed in U.S. Patent 4,318,846. For example, the 4' and 5' carboxys of these compounds can be condensed with Nhydroxysuccinimide using dicyclohexylcarbodiimide to form an amine-selective linking functionality, e.g. as illustrated by examples 6 and 8 of the above-referenced patent (Col. 28-29). Kasai et al., Anal. Chem. Vol. 47, pgs. 34-37 (1975), discloses the basic technique for such condensations. Examples of members of Set II dyes are 2',7'-dimethoxy-4',5'-dichlorofluorescein-5-succinimidylcarboxylate and 2',7'-dimethoxy-4',5'-dichlorofluorescein-6-succinimidylcarboxylate (the -5- and -6- forms being referred to collectively as DDFCS).

Set III consists of tetramethylrhodamine mono-derivatized with a linking functionality at either the 5 or 6 carbon position. Illustrative examples of set III members include tetramethylrhodamine-5-isothiocyanate, tetramethylrhodamine-6-isothiocyanate (the -5- and -6- forms being referred to collectively as TMRITC), tetramethylrhodamine-5-iodoacetamide, tetramethylrhodamine-6-iodoacetamide, tetramethylrhodamine-5-succinimidylcarboxylate, tetramethylrhodamine-6-succinimidylcarboxylate, tetramethylrhodamine-5-maleimide, and tetramethylrhodamine-6-maleimide. These exemplary dyes are available commercially, e.g. Molecular Probes, Inc., or can be synthesized using standard techniques.

Set IV consists of rhodamine X derivatives having a disubstituted phenyl attached to the molecule's oxygen heterocycle, one of the substituents being a linking functionality attached to the 4' or 5' carbon (IUPAC numbering) of the phenyl, and the other being an acidic anionic group attached to the 2' carbon. Illustrative examples of set IV members include Texas Red (tradename of Molecular Probes, Inc.), rhodamine X-5-isothiocyanate, rhodamine X-6-isothiocyanate, rhodamine X-5-iodoacetamide, rhodamine X-6-iodoacetamide, rhodamine X-5-succinimidylcarboxylate, rhodamine X-6-succinimidylcarboxylate, rhodamine X-5-maleimide, and rhodamine X-6-maleimide. Most of these exemplary dyes are available commercially, e.g. Molecular Probes, Inc., or can be synthesized using standard techniques. For example, in the case of Texas Red it can be synthesized according to the procedure disclosed in Titus et al., "Texas Red, a Hydrophilic, Red-Emitting Fluorophore for Use with Fluorescein in Dual Parameter Flow Microfluorometric and Fluorescence Microscopic Studies, " J. Immunological. Methods, Vol.50, pgs. 193-204 (1982).

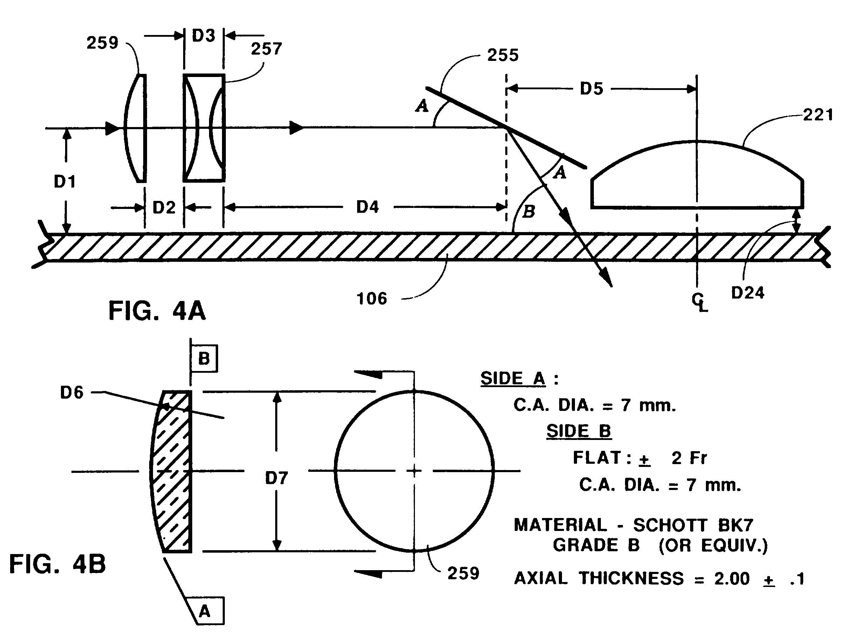

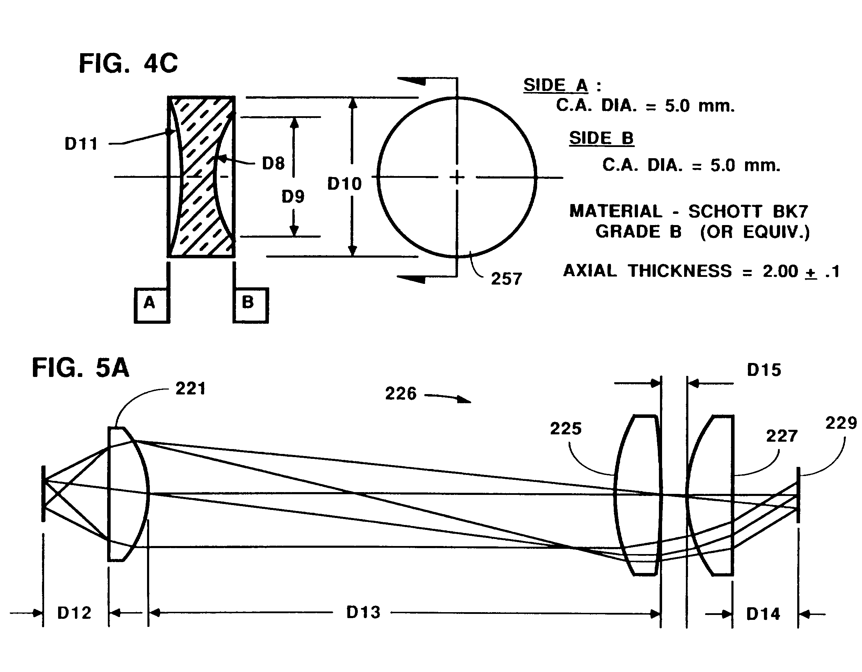

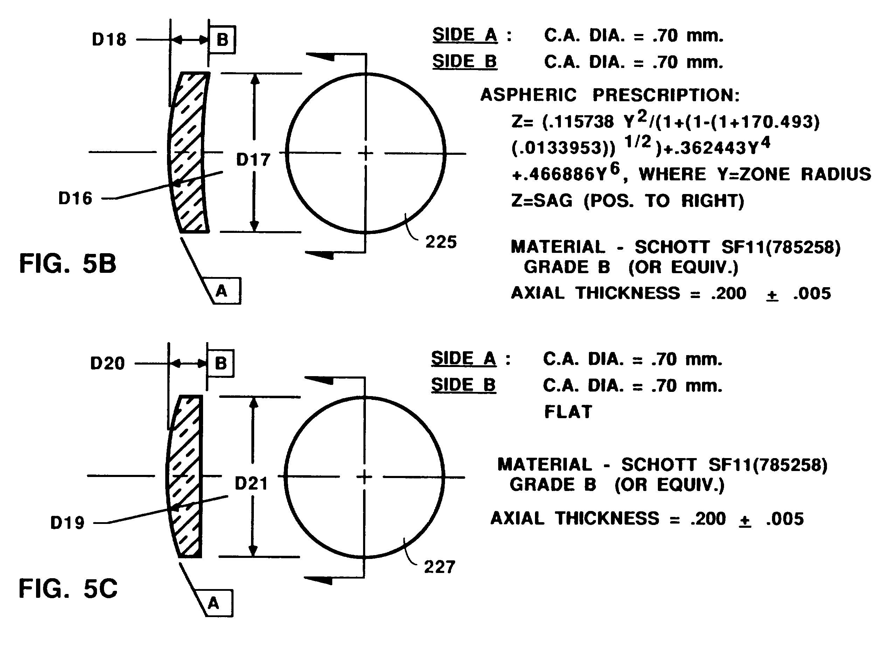

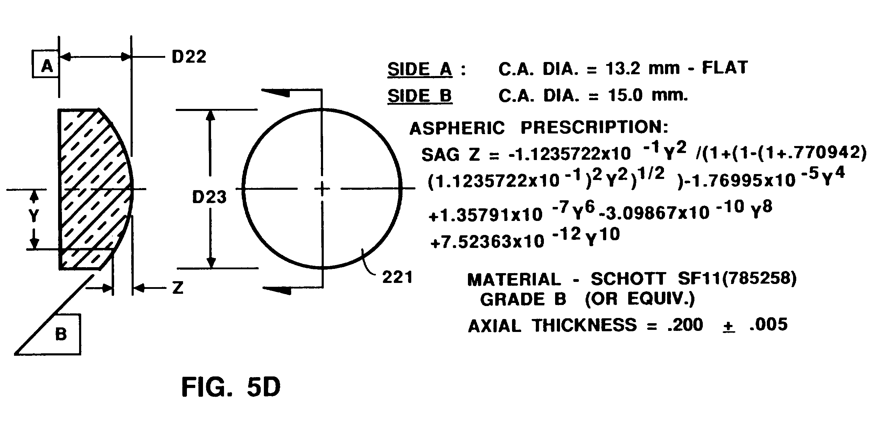

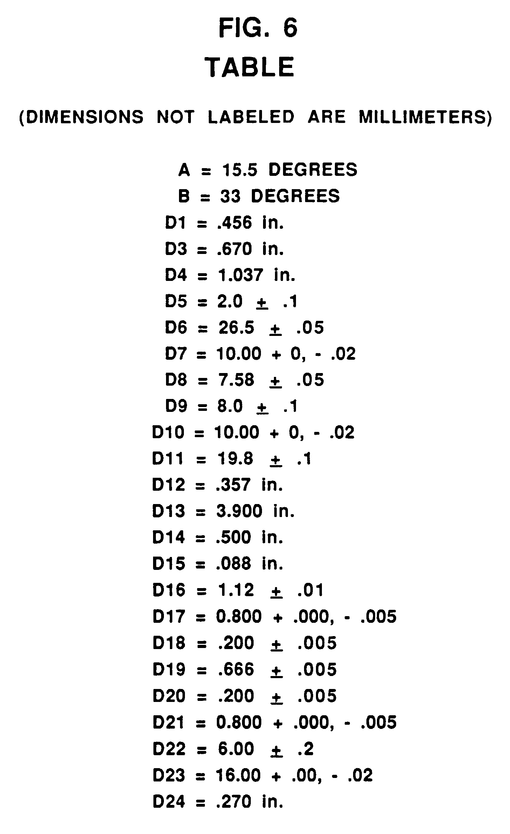

The details of the optics assemblies making up the optical detection system are provided in Figs. 4A through 4C and Figs. 5A through 5C, which show the relative positions of the various lens elements and the specifications for the lenses. The lens dimensions are provided in a Table in Fig. 6.

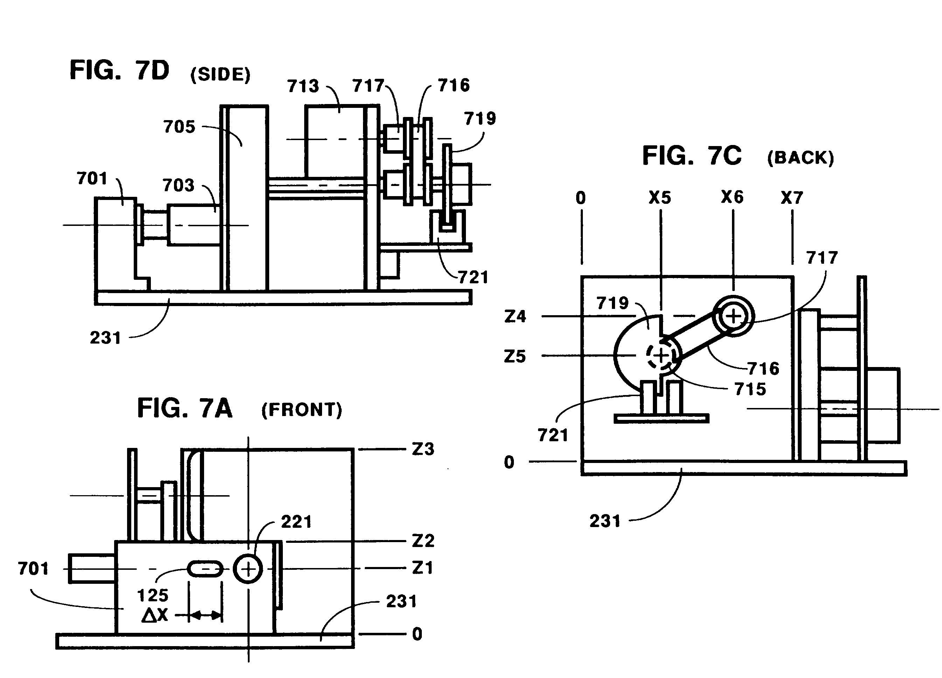

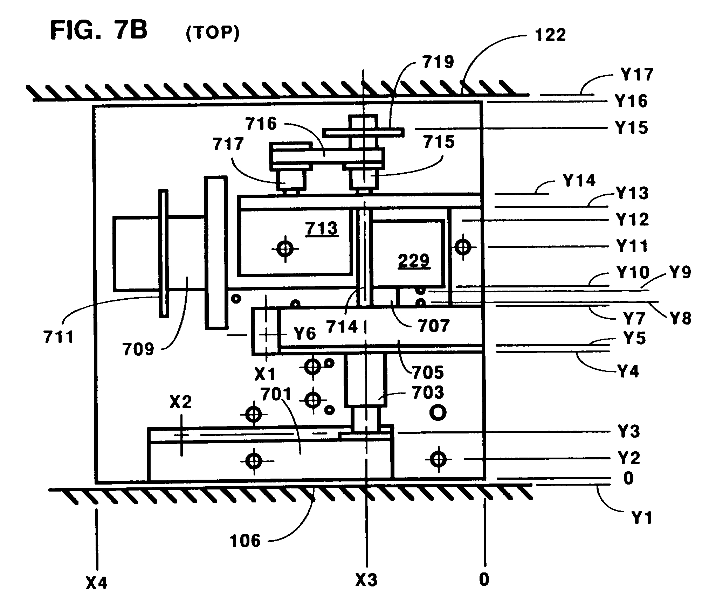

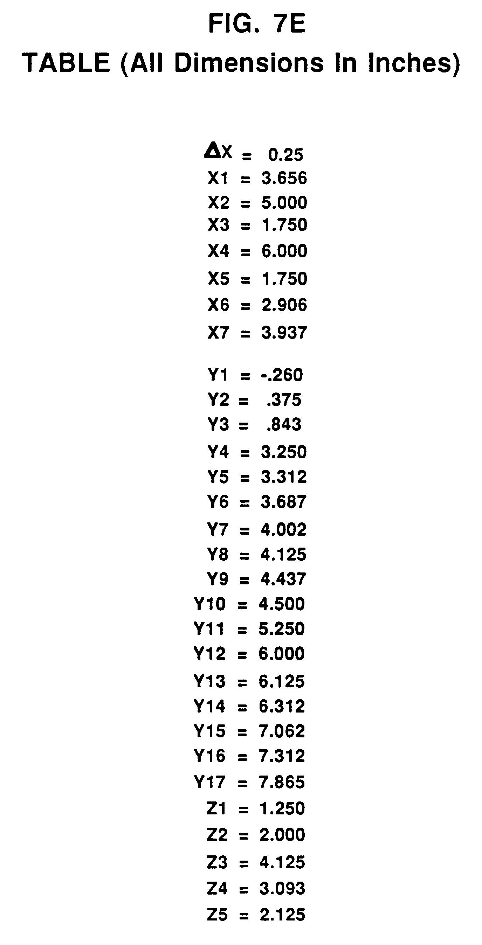

Shown in Figs. 7A through 7D are the mechanical details of the optical detection system 200. A housing 701 holds the focussing telescope 260, and the Brewster angle mirror 255, and contains the collector lens 221 and the slot 125. Light from the collector lens is directed down a tube 703 to the filter wheel 223 which is contained in a wheel housing 705. The Fabry group 226 is contained in a housing 707 adjacent the photomultiplier tube 229. A power supply 709 for the photomultiplier tube is located at one end of the tube and a circuit board 711 provides the electronic controls for the photomultiplier tube and the filter wheel. A stepper motor 713 is used to drive the filter wheel via a drive belt 716 entrained over pulleys 715 and 717, pulley 715 being used to drive shaft 714 which is connected to the filter wheel. An index wheel 719 is used to encode the filter wheel position via an optical encoder 721. Fig. 7E provides a Table having the relevant mechanical dimensions of the optical detection system 200.

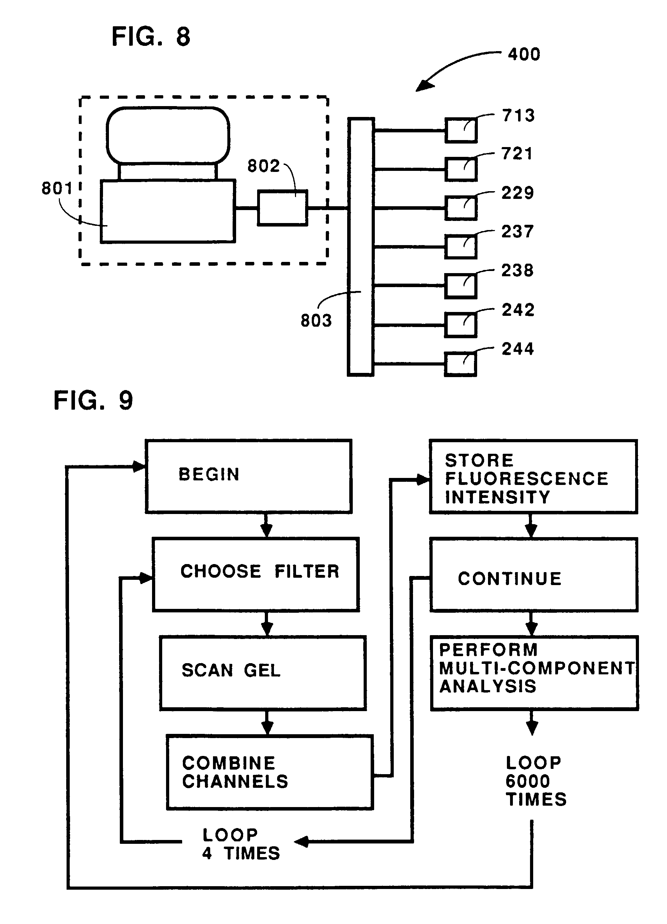

Shown in Fig. 8 is a schematic representation of a computer system 400 for controlling operation of the optical detection system and for performing the required data analysis. The system 400 includes a central computer 801 such as an IBM pc which is coupled to a process control computer 802 such as the Z80 based microcomputer used by Applied Biosystems of Foster City, California, in their 381 DNA synthesizer. The process control computer 802 is coupled to an interface 803 for communicating with the elements of the optical system which require monitoring or control. Those elements include the stepper motor 713, the encoder 721 for the filter wheel, the output from the photomultiplier tube 229, the drive motor 237 for the stage 231, the shaft encoder 238 and the limit switches 242 and 244 for stage 231. Analysis of intensity information obtained during the sequencing process is performed by the central computer 801.

First, samples to be sequenced are prepared according to the Sanger enzymatic method described earlier in the Background of the Invention. The buffer chambers are filled with an appropriate buffer and the electrophoresis apparatus is loaded onto the sliding shelf 117. The gel is then pre-electrophoresed for about one-half hour to remove any fluorescent impurities. The samples are then injected into the wells at the top of the gel and a high voltage is connected between the buffer chambers to start the electrophoresis process.

To start the detection portion of the operation, the laser is turned on and the computer 801 indexes the filter wheel to a first filter and causes the stage 231 to move the optical detection system across the 16 vertical lanes of the gel 104. Each lane corresponds to a separate sequencing operation using all four dyes, in the same manner as the single column used by Lloyd Smith, et al. The stage is moved across the gel in about 1 second, and 192 light intensity measurements are made during the scan. Each measurement of the light intensity is an average taken over a distance of approximiately 0.8mm and over a time of 0.005 seconds, these measurements hereinafter referred to as channels. At the end of the first scan, the computer causes a second filter to be rotated into position (about 0.5 sec. ) in the path of the light being detected. The direction of the stage 231 is then reversed and the optical detection system 200 resumes detection on this reverse scan, again measuring 192 channels. This process is then repeated for the third and fourth filters.

In the preferred mode, each lane in the gel is designed to be about 4mm wide, with each lane being separated by about 4mm, as determined by the comb design when preparing the gel. With this design, each lane spans 5 channels. To increase signal to noise ratio, intensity data associated with the channels corresponding to a particular lane are summed. The four passes past a particular lane then provide four color data for that lane at that time. During each 6 second period ( 4 filters $\times$ (1 sec/scan + 0.5 sec/filter change), a four color datum point is recorded for each lane. This four color data can then be analyzed using multicomponent analysis to provide the desired sequence information as will be described later. A flow chart illustrating the above method is shown in Fig. 9.

Compared to the speed at which the sample DNA moves down a lane, the six second time required to obtain the four color data is nearly simultaneous. In effect, a four wavelength emission spectrum is measured for each time unit during the electrophoresis at a fixed distance down the gel. By multicomponent analysis, the data for these four wavelengths yields information about the four relative concentrations of the dye-labeled DNA pieces moving down a lane. Peak concentrations of a particular dye label then correspond to a particular base in the DNA sequence. The four plots of concentration versus time, are overlayed and the peaks determined, the matching of the peaks with the DNA bases yeilding the sequence.

Analytically, the multicomponent analysis amounts to solving four equations in four unknowns. The general formula for the analysis is :

$$\sum_{j=1}^{4} A_{ij}C_j = F_i \quad i=1,2,3,4$$

where $A_{i,j}$ is the standard fluorescence of dye j at filter wavelength i, and $C_j$ is the concentration of dye j, $F_i$ is the fluorescence intensity measured through filter i. Solving the above equations yields a unique set of concentrations at each point in time. For completely automated analysis, standard noise reduction and peak finding algorithms can be used to call the sequence, or a trained individual can inspect the set of concentrations to arrive at a sequence. For convenience during operation, the four components of concentration are plotted simultaneously on a color monitor on computer system 801 while the gel is being scanned during electrophoresis.

The standard fluorescence coefficients Cij are determined by measuring the fluorescence with each filter when a known unit concentration of each dye is present in the gel, cone dye at a time. For such measurements, one can use a single band of dye-label led primer. Generally these coefficients are a function of the laser wavelength and intensity, the gel characteristics, the optical filter, and photomultiplier response.

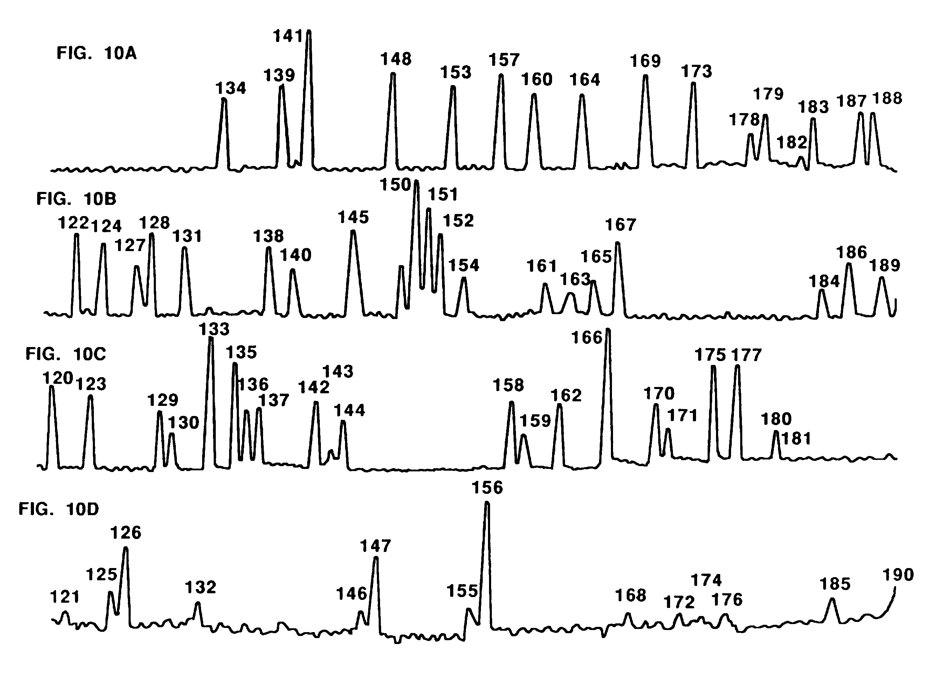

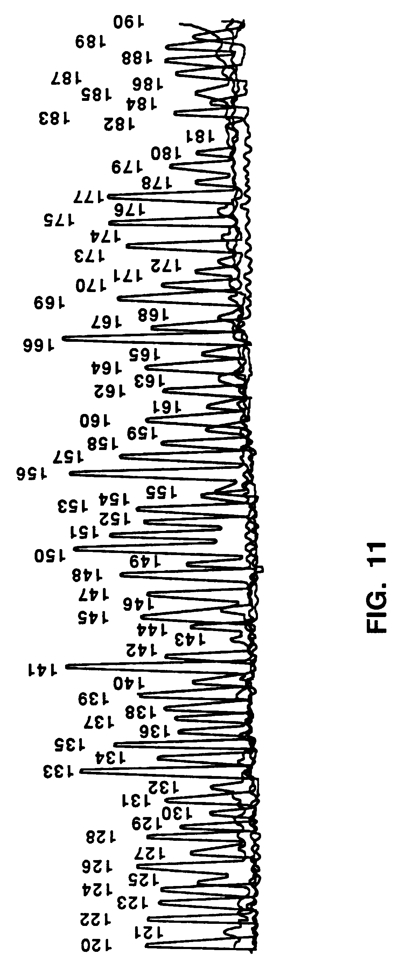

Figs. 10 and 11 illustrate the result of a DNA sequencing run made with the invention on bases 120 through 190 of the cloning vector mp8 of the bacteriohpage M13 using DNA polymerase, Klenow fragment. The results shown correspond to one lane of the sixteen, the other lanes providing the same kind of information for the particular samples sequenced there. The specific dyes corresponding to this run are fluoroscein-5-isothiocyanate; 2',7'-dimethoxy-4'-5'-dichlorofluorescein; tetramethylrhodamine-5-isothiocyanate, and Texas Red. Fig. 10 shows the relative intensities recorded for each base during the sequencing run as a function of time. Fig. 11 shows the four different intensities plotted one on top of the other, which makes the sequence somewhat easier to call, since the relationship between peaks becomes more apparent. This relationship is even clearer when using a color monitor on the computer 801 so that the intensity for each base is plotted in a different color, one on top of the other. As indicated, in most instances, the call is unequivocal. However, certain low signal peaks do occur. For example, see bases 174 and 181. In an unknown sample, such bases in the sequence might be overlooked. However, as is typical even in radiographic sequencing, those skilled in the art often do more than one sequencing run, typically with other sequencing emzymes to eliminate ambiguous base calls caused by the particular chemistry chosen. For example, it is well known to those skilled in the art that the cytosine sequence has large variations in amplitude. Hence, one typically also performs a sequencing run on the complementary strand to check the results of the cytosine call. Another approach is to use a different enzyme completely, for example, reverse transcriptase.

Hence, the automated method and apparatus of the invention can be used to provide high speed, definitive sequencing analysis on many samples at once. This permits more than one clone to be sequenced at a time, vastly decreasing the time required to sequence larger fragments, and reducing costs accordingly. In addition, as designed, once the system is constructed, little if any further alignment by trained personnel is required at the operating end. Further, as compared to the radiographic method, the real time sequencing method has many other benefits. First, sequencing is performed with all four bases in one lane, rather than four separate lanes, thus avoiding mobility variation problems between lanes. Second, no radioactive materials are required, and the materils that are used have a considerably longer shelf life than radioactive materials. Third, because the system is real time, a run can be stopped in the middle and redone, rather than having to wait for the entire radiographic sequencing to be concluded, only to find out the run was bad.

Various modifications of the above apparatus and method can be made. For example, one could use a series of independent columns arranged in a linear, array for the electrophoresis lanes rather than a slab gel. Also, different percentage gels could be used for the entire slab or different percentage gels could be used in adjacent lanes of the slab, in order to separate different size fragments, in a manner similar to the stacking gels used in protein electrophoresis. Furthermore, different stages and drive systems could be used as well as different sources of electromagnetic radiation.

## Claims

1. Apparatus for detecting electromagnetic radiation from plurality of electrophoretic lanes (108,110) which are parallel and arranged in a planar array, the apparatus comprising:

   optical means (200) for detecting radiation at a plurality of wavelengths emanating from the plurality of lanes, the optical means including

   collecting means (221,226) for collecting and focusing the radiation from a localised area of each lane one lane at a time, filter means (223) for receiving the radiation from the collecting means and for selectively transmitting said plurality of wavelengths of radiation, and a detector (229) for measuring the intensity of radiation received from the filter means and for producing an output signal in response to the radiation;

   a stage (231) for mounting the optical means and which is translatable in a direction parallel to the planar array of electrophoretic lanes and transverse to the lanes for repeatedly scanning the array at a fixed distance along each lane; and computer means (400) for controlling the filter means and the operation of the stage to provide translation of the stage across the lanes in each scan during electrophores for receiving intensity data from the detector, and for correlating the intensity data with corresponding electrophoretic lanes and corresponding wavelengths transmitted by the filter means.

2. Apparatus according to claim 1, wherein the optical means (200) for detecting electromagnetic radiation is substantially insensitive to minor misalignment of the electrophoretic lanes, the collecting means comprising

> a collection lens (221) for collecting electromagnetic radiation from the array of electrophoretic lanes; and
> a lens (226) for imaging the collection element onto the detector.

3. Apparatus according to claim 1 or claim 2 further comprising
> means (251,253,255,260) for directing light from a light source onto each lane in turn.

4. Apparatus according to any one of claims 1 to 3, wherein the stage is translatable in a direction which is substantially perpendicular to the electrophoretic lanes, and wherein the computer means includes means for selecting an appropriate filter between successive scans.

5. A method of detecting fluorescence from plurality of electrophoretic lanes using the apparatus according to claim 1, the method comprising the steps of:

> illuminating molecules during electrophoretic separation with electromagnetic radiation, the molecules being labelled with fluorescent dyes; collecting fluorescence output from the electrophoretic lanes by repeatedly moving the optical means of the apparatus of claim 1 across the electrophoretic lanes during electrophoretic separation;
> focusing the fluorescent light to the detector to provide an intensity profile as the optical means is moved across the electrophoretic lanes; and sorting the intensity profile in time to identify a time ordered sequence of dyes traversing each electrophoretic lane.

6. A method according to claim 5, in which the stage scans at a rate of about 160 millimeters per second, each item of data intensity is collected over an interval of about 0.005 seconds, the wavelength of light transmitted to the detector is altered between each scan within an interval of about 0.5 seconds and each scan is completed in about 1.5 seconds.

7. A method according to claim 5 or claim 6, in which the molecules are DNA fragments.

**Patentansprüche**

1. Ein Apparat zum Erfassen elektromagnetischer Strahlung aus einer Mehrzahl elektrophoretischer Spuren (108, 110), die parallel und in einem planaren Feld angeordnet sind, wobei der Apparat folgendes aufweist:

> ein optisches Mittel (200) zum Erfassen von Strahlung bei einer Mehrzahl von Wellenlängen, die von der Mehrzahl von Spuren ausgehen, wobei das optische Mittel folgendes umfaßt:

>> Sammelmittel (221, 226) zum Sammeln und Fokussieren der Strahlung aus einem lokalisierten Bereich jeder Spur von jeweils einer Spur,

>> ein Filtermittel (223) zum Empfangen der Strahlung vom Sammelmittel und zum selektiven Übertragen der Mehrzahl von Strahlungswellenlängen, sowie

>> einen Detektor (229) zum Messen der Intensität von vom Filtermittel empfangener Strahlung und zum Erzeugen eines Ausgangssignals als Reaktion auf die Strahlung;

> einen Ständer (231) zum Befestigen des optischen Mittels, das in einer zum planaren Feld elektrophoretischer Spuren parallelen Richtung sowie quer zu den Spuren umgesetzt werden kann, der das Feld in einem festen Abstand entlang jeder Spur abtastet; sowie

> ein Rechnermittel (400) zum Steuern des Filtermittels und der Bedienung des Ständers, um bei jedem Abtastvorgang während der Elektrophorese das Umsetzen des Ständers über die Spuren zu ermöglichen, um Intensitätsdaten vom Detektor zu empfangen und um die Intensitätsdaten mit entsprechenden elektrophoretischen Spuren und entsprechenden, vom Filtermittel übertragenen Wellenlängen in Beziehung zu setzen.

2. Ein Apparat nach Anspruch 1, worin das optische Mittel (200) zum Erfassen elektromagnetischer Strahlung im wesentlichen unempfindlich für geringe Fehlausrichtungen der elektrophoretischen Spuren ist, wobei das Sammelmittel folgendes aufweist:

> eine Sammellinse (221) zum Sammeln elektromagnetischer Strahlung aus dem Feld elektrophoretischer Spuren; sowie

> eine Linse (226) zum Abbilden des Sammelelements auf dem Detektor.

**3.** Ein Apparat nach Anspruch 1 oder 2, weiterhin aufweisend:
Mittel (251, 253, 255, 260), um Licht aus einer Lichtquelle der Reihe nach auf jede Spur zu lenken.

**4.** Ein Apparat nach einem der Ansprüche 1 bis 3, worin der Ständer in eine Richtung umgesetzt werden kann, die im wesentlichen senkrecht zu den elektrophoretischen Spuren ist, und worin das Rechnermittel ein Mittel zum Auswählen eines geeigneten Filters zwischen aufeinanderfolgenden Abtastvorgängen umfaßt.

**5.** Ein Verfahren zum Erfassen von Fluoreszenz aus einer Mehrzahl elektrophoretischer Spuren unter Verwendung des Apparats nach Anspruch 1, wobei das Verfahren folgende Schritte aufweist:

Beleuchten von Molekülen während der elektrophoretischen Separation mit elektromagnetischer Strahlung, wobei die Moleküle mit fluoreszierenden Farbstoffen markiert sind;

Sammeln der Fluoreszenzausgabe der elektrophoretischen Spuren durch wiederholtes Bewegen des optischen Mittels des Apparats nach Anspruch 1 über die elektrophoretischen Spuren während der elektrophoretischen Separation;

Fokussieren des fluoreszierenden Lichts auf den Detektor, so daß ein Intensitätsprofil entsteht, während das optische Mittel über die elektrophoretischen Spuren bewegt wird; sowie

Sortieren des Intensitätsprofils nach Zeit, um eine nach Zeit geordnete Sequenz von Farbstoffen, die jede elektrophoretische Spur kreuzen, zu identifizieren.

**6.** Ein Verfahren nach Anspruch 5, worin der Ständer mit einer Geschwindigkeit von ca. 160 Millimeter pro Sekunde abtastet, jeder einzelne Datenintensitätswert über ein Intervall von ca. 0,005 Sekunden gesammelt wird, die Wellenlänge von an den Detektor übertragenem Licht zwischen jedem Abtastvorgang innerhalb eines Intervalls von ca. 0,5 Sekunden verändert wird und jeder Abtastvorgang in ca. 1,5 Sekunden abgeschlossen ist.

**7.** Ein Verfahren nach Anspruch 5 oder 6, worin die Moleküle DNS-Fragmente sind.

**Revendications**

**1.** Appareil pour détecter un rayonnement électromagnétique à partir d'une pluralité de voies électrophorétiques (108, 110), qui sont parallèles et disposées dans un arrangement plan, l'appareil comprenant :

- un moyen optique (200) pour détecter un rayonnement à une pluralité de longueurs d'onde émanant de la pluralité de voies, le moyen optique comprenant :

    - un moyen collecteur (221, 226) pour collecter et focaliser le rayonnement à partir d'une zone localisée de chaque voie, une voie à la fois ;
    - un moyen formant filtre (223) pour recevoir le rayonnement provenant du moyen collecteur et pour transmettre de façon sélective ladite pluralité de longueurs d'onde de rayonnement ; et
    - un détecteur (229) pour mesurer l'intensité de rayonnement reçue par le moyen formant filtre et pour produire un signal de sortie en réponse au rayonnement ;
    - une platine (231) pour monter le moyen optique et qui peut être déplaçable en translation dans une direction parallèle à l'arrangement plan de voies électrophorétiques et transversale aux voies pour balayer de façon répétée de l'arrangement à une distance fixe le long de chaque voie ; et
    - un moyen formant ordinateur (400) pour commander le moyen formant filtre et le fonctionnement de la platine pour assurer une translation de la platine à travers les voies dans chaque balayage pendant l'électrophorèse pour recevoir des données d'intensité en provenance du détecteur, et pour corréler les données d'intensité avec les voies électrophorétiques correspondantes et les longueurs d'onde correspondantes transmises par le moyen formant filtre.

**2.** Appareil selon la revendication 1, dans lequel le moyen optique (200) pour détecter le rayonnement électromagnétique est sensiblement insensible à un défaut d'alignement mineur des voies électrophorétiques, le moyen collecteur comprenant :

- une lentille collectrice (221) pour collecter le rayonnement électromagnétique provenant de l'arrangement de voies électrophorétiques ; et
- une lentille (226) pour former une image de l'élément collecteur sur le détecteur.

**3.** Appareil selon la revendication 1 ou la revendication 2, comprenant en outre :

- un moyen (251, 253, 255, 260) pour diriger de la lumière provenant d'une source de lumière sur chaque voie à son tour.

4. Appareil selon l'une des revendications 1 à 3, dans lequel la platine peut être déplaçable en translation dans une direction qui est sensiblement perpendiculaire aux voies électrophorétiques, et dans lequel le moyen formant ordinateur comprend un moyen pour sélectionner un filtre approprié entre des balayages successifs.

5. Procédé de détection de fluorescence à partir d'une pluralité de voies électrophorétiques à l'aide de l'appareil selon la revendication 1, le procédé comprenant les étapes consistant à :

   - éclairer des molécules pendant la séparation électrophorétique avec un rayonnement électromagnétique, les molécules étant marquées par des colorants fluorescents ;
   - collecter la sortie de fluorescence en provenance des voies électrophorétiques par déplacement répété du moyen optique de l'appareil selon la revendication 1 à travers les voies électrophorétiques pendant la séparation électrophorétique ;
   - focaliser la lumière fluorescente sur le détecteur pour fournir un profil d'intensité au fur et à mesure que le moyen optique est déplacé à travers les voies électrophorétiques ; et
   - trier le profil d'intensité dans le temps pour identifier une séquence ordonnée dans le temps de colorants traversant chaque voie électrophorétique.

6. Procédé selon la revendication 5, dans lequel la platine balaye à une vitesse d'environ 160 millimètres par seconde, chaque donnée élémentaire d'intensité de données est collectée sur un intervalle d'environ 0,005 seconde, la longueur d'onde de lumière transmise au détecteur est modifiée entre chaque balayage à l'intérieur d'un intervalle d'environ 0,5 seconde et chaque balayage est terminé en environ 1,5 seconde.

7. Procédé selon la revendication 5 ou la revendication 6, dans lequel les molécules sont des fragments d'ADN.

FIG. 1

# FIG. 2A

FIG. 2B

104
106
105
119
221 223 225 227 229 300
226
109
122
237 233 231 239 241
117

FIG. 3A

102
98
99
104

FIG. 3B

106
90
105
91 93 95
98
97
92 94 96 99

FIG. 4A

FIG. 4B

SIDE A :
C.A. DIA. = 7 mm.

SIDE B
FLAT : ± 2 Fr
C.A. DIA. = 7 mm.

MATERIAL - SCHOTT BK7
GRADE B (OR EQUIV.)
AXIAL THICKNESS = 2.00 ± .1

# FIG. 4C

SIDE A :
C.A. DIA. = 5.0 mm.

SIDE B
C.A. DIA. = 5.0 mm.

MATERIAL - SCHOTT BK7
GRADE B  (OR EQUIV.)

AXIAL THICKNESS = 2.00 ± .1

D11

D8

D9

D10

257

A    B

# FIG. 5A

221

226 →

D15

225

227    229

D12    D13    D14

**FIG. 5B**

D18
D16
D17
225
A
B

EP 0 294 524 B1

SIDE A :   C.A. DIA. = .70 mm.
SIDE B     C.A. DIA. = .70 mm.

ASPHERIC  PRESCRIPTION:

$$Z= (.115738\ Y^2/(1+(1-(1+170.493)$$
$$(.0133953))^{1/2})+.362443Y^4$$
$$+.466886Y^6,\ \text{WHERE}\ Y{=}\text{ZONE RADIUS}$$

Z=SAG (POS. TO RIGHT)

MATERIAL - SCHOTT SF11(785258)
   GRADE B  (OR EQUIV.)

AXIAL THICKNESS = .200 $\pm$ .005

---

**FIG. 5C**

D20
D19
D21
227
A
B

SIDE A :   C.A. DIA. = .70 mm.
SIDE B     C.A. DIA. = .70 mm.
         FLAT

MATERIAL - SCHOTT SF11(785258)
   GRADE B  (OR EQUIV.)

AXIAL THICKNESS = .200 $\pm$ .005

**SIDE A :**   C.A. DIA. = 13.2 mm - FLAT

**SIDE B**   C.A. DIA. = 15.0 mm.

ASPHERIC PRESCRIPTION:

$$SAG\ Z = -1.1235722 \times 10^{-1} Y^2 / (1 + (1 - (1 + .770942)(1.1235722 \times 10^{-1})^2 Y^2)^{1/2}) - 1.76995 \times 10^{-5} Y^4$$
$$+ 1.35791 \times 10^{-7} Y^6 - 3.09867 \times 10^{-10} Y^8$$
$$+ 7.52363 \times 10^{-12} Y^{10}$$

MATERIAL - SCHOTT SF11(785258)
GRADE B  (OR EQUIV.)

AXIAL THICKNESS = .200 ± .005

**FIG. 5D**

EP 0 294 524 B1

# FIG. 6
# TABLE

**(DIMENSIONS NOT LABELED ARE MILLIMETERS)**

$A$ = 15.5 DEGREES
$B$ = 33 DEGREES
$D1$ = .456 in.
$D3$ = .670 in.
$D4$ = 1.037 in.
$D5$ = 2.0 ± .1
$D6$ = 26.5 ± .05
$D7$ = 10.00 + 0, - .02
$D8$ = 7.58 ± .05
$D9$ = 8.0 ± .1
$D10$ = 10.00 + 0, - .02
$D11$ = 19.8 ± .1
$D12$ = .357 in.
$D13$ = 3.900 in.
$D14$ = .500 in.
$D15$ = .088 in.
$D16$ = 1.12 ± .01
$D17$ = 0.800 + .000, - .005
$D18$ = .200 ± .005
$D19$ = .666 ± .005
$D20$ = .200 ± .005
$D21$ = 0.800 + .000, - .005
$D22$ = 6.00 ± .2
$D23$ = 16.00 + .00, - .02
$D24$ = .270 in.

# FIG. 7D (SIDE)

# FIG. 7C (BACK)

# FIG. 7A (FRONT)

EP 0 294 524 B1

# FIG. 7B    (TOP)

EP 0 294 524 B1

# FIG. 7E
# TABLE (All Dimensions In Inches)

$\Delta$X = 0.25
X1 = 3.656
X2 = 5.000
X3 = 1.750
X4 = 6.000
X5 = 1.750
X6 = 2.906
X7 = 3.937

Y1 = -.260
Y2 = .375
Y3 = .843
Y4 = 3.250
Y5 = 3.312
Y6 = 3.687
Y7 = 4.002
Y8 = 4.125
Y9 = 4.437
Y10 = 4.500
Y11 = 5.250
Y12 = 6.000
Y13 = 6.125
Y14 = 6.312
Y15 = 7.062
Y16 = 7.312
Y17 = 7.865
Z1 = 1.250
Z2 = 2.000
Z3 = 4.125
Z4 = 3.093
Z5 = 2.125

## FIG. 8

713
721
229
237
238
242
244

400

801
802
803

## FIG. 9

BEGIN

CHOOSE FILTER

SCAN GEL

COMBINE CHANNELS

LOOP 4 TIMES

STORE FLUORESCENCE INTENSITY

CONTINUE

PERFORM MULTI-COMPONENT ANALYSIS

LOOP 6000 TIMES

FIG. 10A

FIG. 10B

FIG. 10C

FIG. 10D

EP 0 294 524 B1

FIG. 11